# EUROPEAN PATENT APPLICATION

(11) **EP 4 617 032 A1**
(43) Date of publication of application: **17.09.2025**
(21) Application number: 25162699.0
(22) Date of filing: 10.03.2025
(51) Int. Cl.: B29C 33/06, B29C 70/44, B29C 43/56, B30B 15/34, B29C 70/34, B29C 33/30, B29C 33/04, B29C 39/38, B29C 35/16, B29C 51/10

(54) **HOT-MOLDING METHOD**

(30) Priority: 14.03.2024 IT 202400005740
(71) Applicant: Alia Mentis S.r.l., 31050 Vedelago TV (IT)
(72) Inventor: Paronetto, Giuseppe, 31050 Vedelago (TV) (IT); Paronetto, Giampietro, 31050 Vedelago (TV) (IT); Tessaro, Luca, 31050 Vedelago (TV) (IT)
(74) Representative: Citron, Massimiliano

(57) **Abstract**

A hot-molding method is described for producing a compound object formed of a solid internal core and an external carbon layer covering the entire core, with the steps of:
a) taking two combinable shells to obtain a complete mold cavity,
b) enclosing within the cavity formed by the juxtaposition of the two shells a solid core completely wrapped in a carbon lamination;
c) placing the two shells thus filled and attached to each other inside a closed chamber of a press between two pressing members,
d) moving at least one of the two pressing members towards the other to press the shells against each other,
e) heating the core and the carbon layer to make the core expand towards the cavity and solidify the carbon and weld it to the core,
f) separating the shells, and extracting the molded object.

## Description

The invention relates to a hot-molding method convenient for molding a solid compound object consisting of an internal core and an external carbon shell.

It is known to produce from powdered material, see e.g. EP2697028, cores which are covered with layers of carbon, inserted into a mold and heated in an oven to form a compound piece with the shape of the mold cavity.

This mold is a solid block of steel milled to form the cavity. The mold is therefore very expensive to make, heavy to handle, and energy-intensive to heat.

The main object of the invention is to improve the state of the art.

Another object of the invention is a faster and less expensive molding method.

A hot-molding method is proposed for producing a compound object, with the following steps:
a) taking two mold shells combinable to obtain a complete mold cavity,
b) enclosing within the cavity formed by the juxtaposition of the two shells a solid core completely wrapped by an external layer, e.g. in a limp carbon lamination;
c) placing the two shells thus filled and attached to each other inside a closed chamber of a press,
d) pressing the shells against each other inside the press,
e) heating the core and the outer layer, e.g. to 130-140 degrees, to
   make the core expand towards the cavity and
   solidifying (*curing*) the outer layer and fixing it to the core,
f) separating the shells, and extracting the molded compound object.

*Compound object* is defined here as an object consisting of a solid inner core and an outer layer that covers the entire core. Preferably the outer layer is carbon or a carbon lamination, e.g. resin impregnated or *pre-preg.*

The method allows the core and outer layer to be heated and pressed simultaneously when contained in the mold shells, which are much lighter and easier to build than a conventional massive mold. The lower mass of the shells translates into lower thermal inertia, resulting in much steeper heating ramps and shorter curing times.

Preferably, in step c) the two shells are placed between two pressing members of the press, and in step d) at least one of the two pressing members is moved towards the other to press the shells against each other.

Said two pressing members are for example press plates, e.g. flat plates, and more preferably they are two dies each shaped to reproduce in negative the shape of one of said shells respectively.

Such dies have the advantage of not only uniformly heating the shells (which are relatively thin), and therefore the materials to be molded contained within them, but also of preventing the shells from deforming due to temperature or repeated molding cycles.

Such a press is preferably equipped to accommodate a plurality of shell molds simultaneously, with the advantage of easy and fast loading of the molds, i.e. the shells.

In particular, said core is a solid object obtained by hot-molding of - and formed only of - powdered material or material in the form of microspheres or particles. In particular, the powdered material comprises - or is made up of - expanded particles and non-expanded particles, the particles being made of plastic material, closed in shape, hollow and filled with gas.

Plastic microspheres filled with gas may be used as particles to mold the core. In particular, the powder material to be molded is preferably composed by weight of 10÷70% of expanded microspheres and 90÷30% of non-expanded microspheres, the microspheres being made of plastic material, closed shape, hollow and filled with gas. These values guarantee advantageous performance and weight suitable for the applications, in particular good results of impact absorption and lightness.

The expanded microspheres are essential to the invention, and act as a binder or filler for the other non-expanded particles. In fact, the expanded microspheres are the filler member with a binder function to prevent the other expandable microspheres (not yet expanded), which are heavier, from falling by gravity to the bottom of the mold and thickening. Instead, the expanded microspheres keep the expanding microspheres suspended in the entire material and in a uniform manner. This is why the presence of expanded and non-expanded microspheres guarantees the homogeneity of the density of the entire core, guaranteeing uniformity of the mechanical performance.

Microspheres are generally spherical in shape and very small (10 ÷ 40 µm in diameter). Note, however, that size is not essential.

In a preferred embodiment, with the advantage that a molded compound object is produced very quickly and with an accelerated and simplified process,
the press is fed sequentially by preparing a group of molds as in steps a) and b), and
for each mold of the group, one or more at a time, steps c), d), e) are carried out.

The shells containing a carbon laminated core are placed into the press one or more at a time for curing, enabling rapid serial production.

One problem is that residual air or gas inside the core under the outer layer can cause defects in the molded object, especially with the use of carbon as the outer layer. The traditional technique requires that the closed mold, before going into the oven for curing, is put in an autoclave for a long time in order to suck out the residual air, which however can only escapes from the mold, little and with difficulty, through the mold separation lines.

In a preferred embodiment, prior to step d), the gas pressure inside the chamber is reduced to suck residual air or gas from inside the mold cavity formed by the shells. This technique is made possible by the press design, whose closed, preferably airtight, chamber can become a reduced-pressure environment while simultaneously containing and supporting the mold shells. In particular, to facilitate the suction of residual air or gas, the two shells as filled in step b) are placed between the two dies (or press plates) keeping them slightly separated, and then the gas pressure inside the chamber is reduced to suck residual air out of the shells. Even more preferably, spacer members are placed between the two shells to keep them slightly separated, thereby greatly increasing the extraction efficiency by creating an open escape route for the air between the shells. Note that unlike conventional autoclave treatment, the air is extracted from the mold cavity while the core and carbon are already in the mold shells, which will give the final shape to the molded product, and are already inside the press.

In general, the mold shells, when inside the press, may be heated in various ways.

A very effective heating technique is induction heating. However, applying it to conventional molds is very expensive and complicated. Mass production requires many molds, thus multiplying the costs. In a preferred embodiment of the method, step e) occurs by electrically powering electrical conductors placed in at least one of the dies (or press plates) to heat the two shells by electromagnetic induction. In this way, the complex induction system only needs to be implemented once, in at least one die (or press plate) resident in the press, while the shells remain simple, economical and lightweight in structure.

In a different preferred embodiment, which avoids the cost and long manufacturing times of an induction system, step e) occurs by sending a heating fluid into channels obtained inside the volume of the two mold shells and/or dies to heat them. In particular, the channels obtained inside the volume of the two mold shells are obtained by molding the shells with *3D-printing* technology.

This way, the complexity of an induction system can be avoided and the dies are exploited for pressing and maintaining the shape of the mold shells.

To promote a fast pre-series or sampling production stage, and at the same time an efficient and fast serial production stage, step e) takes place:
for a certain number of molded objects, by circulating a heating fluid inside channels created inside the volume of the two mold shells to heat them,
and for subsequent molded objects, replacing the mold shells with shells without internal channels and electrically supplying electrical conductors placed in at least one of the dies (or press plates) to heat the two mold shells via electromagnetic induction.

In a different preferred embodiment, the die (or press plate) has a dual heating function, i.e. step e) occurs, for a certain number of molded objects, by circulating a heating fluid inside channels created inside one of the dies (or press plates) to heat them, and for the subsequent molded objects
mold shells without internal channels are used, and
after installing electrical conductors in the said channels of the die (or press plate), these electrical conductors are electrically powered to heat the two mold shells by electromagnetic induction.

In particular, the dual function is ensured by the fact that the cavity of at least one die (or press plate) has a surface in which grooves are evenly distributed, and a cover member is applied to this cavity to cover and plug the grooves, turning them into closed channels. A heating fluid is then circulated inside the closed channels to heat the die (or press plate). The cover member is then removed, electrical conductors are installed in the grooves, and the electrical conductors are electrically powered to heat the mold shells via induction.

In a preferred embodiment, before step f) the two shells are cooled by circulating a refrigerant fluid inside internal channels of the shells and/or dies. In a more preferred embodiment, before step f) the two shells are cooled
- by introducing a refrigerant fluid, e.g. a liquid, into the chamber, and/or
- moving the chamber to immerse it into a basin filled with cooling liquid, e.g. water, and opening the chamber so that the liquid invades the chamber and submerges the shells and/or dies to cool them.

In general, the variants described for the dies may be applied, *mutatis mutandis ,* to the press plates.

In general, the mold may also be composed of more than two shells.

The advantages of the invention will be made even clearer by the following description of a preferred method, wherein
- Figs. 1-6 show molding steps for a compound object;
- Figs. 7-8 show details of a press for molding a compound object.

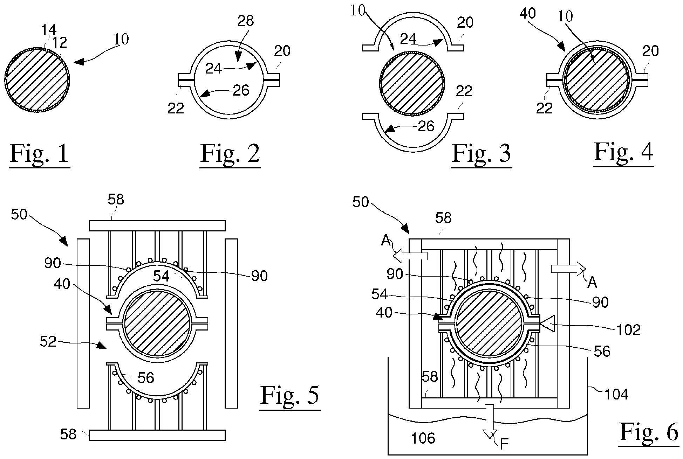

The hot-molding method begins (fig. 1) with the production of a compound object 10 consisting of a solid inner core 12 and a limp outer layer 14 of laminated carbon that covers the entire core 12. The shape and thicknesses of the object 10 in the drawings are examples only.

The object 10 is placed, by hand or by robot, between two mold shells 20, 22 which respectively have an internal cavity 24, 26. The shells 20, 22 are combinable to obtain, thanks to their juxtaposition, an overall closed mold cavity 28 (fig. 2) given by the juxtaposition of the cavities 24, 26. The cavity 28 is configured to accommodate the object 10 snugly.

The object 10 is placed, by hand or by robot, between the shells 20, 22 (fig. 3) and the two shells 20, 22 are superimposed and/or attached (fig. 4), e.g. by hand, to enclose the object 10 inside the cavity 28 and form an assembly 40. It is also possible to arrive at the assembly 40 of fig. 4 by preparing the object 10 in a different way. The layer 14 is laminated first on the cavity 24, then the internal core 12 is placed in contact with it, then another layer 14 is laminated on the still free external surface of the core 12, and finally the shell 22 is attached to the shell 20 (fig. 3).

An advantage and function of the shells 20, 22 are to immobilize the object 10 during subsequent molding operations.

The assembly 40 is then placed, by hand or by robot, into a press 50 (fig. 5) for curing.

The press 50 comprises a cooking chamber 52 adapted to raise the temperature of the assembly 40 and the object 10. In the chamber 52 are installed two dies 54, 56 shaped to reproduce in negative the external shape of the shells 20, 22, respectively. In particular, at least one of the dies 54, 56 is integral with a part 58 of the press 50 which is movable to move one of the dies 54, 56 towards the other (i.e. to bring the dies 54, 56 closer together). In the drawing, for example, two movable parts 58 are shown, one for each die 54, 56.

The process continues with the dies 54, 56 being moved towards each other to reach and touch the shells 20, 22, surround and enclose them completely, and press them against each other (fig. 6). The juxtaposition of the dies 54, 56 forms an overall cavity in which the assembly 40 is snugly enclosed.

The chamber 52 is then closed to isolate it from the outside of the press 50. The movement of the part 58 and/or of one or each die 54, 56 may contribute to the closing of the chamber 52, but not necessarily; that is, the part 58 is not or does not make up necessarily a wall of the chamber 52. That is, the dies 54, 56 may be moved by dedicated means that are installed inside the chamber 52 but that do not have the function of closing the chamber 52 such as, for example, a movable wall.

With the chamber 52 closed, the shells 20, 22 are then heated to heat the core 12 and the layer 14 (fig. 6) in order to cure the object to be molded. During curing the core 12 expands and pushes the layer 14 against the cavity 28; at the same time the layer 14 solidifies and fixes to the core 12.

Since the inner core 12 expands during curing and will push the layer 14 towards the inner walls of the shells 20, 22, the molded object will copy the shape of the cavity 28. This is another function and advantage of the shells 20, 22. At the same time, the opposing dies 54, 56 prevent the shells 20, 22 from deforming due to the curing temperature and/or repeated molding cycles.

Once the curing is finished, the dies 54, 56 are opened (fig. 5), the assembly 40 is removed from the press 50 and the shells 20, 22 are separated to extract the final molded object. Then the cycle starts again for another object 10 as in fig. 1.

In a preferred variation of the method, time and energy are saved by feeding the press 50 serially for mass production by taking, one at a time, an assembly 40 from a group of already prepared assemblies 40 and assembling it in the press 50, e.g. by hand or by robot, for curing as explained in Fig. 5.

In a preferred variation of the method, prior to the curing of Fig. 6 and after blocking the assembly 40 between the dies 54, 56 and closing the chamber 52, the gas pressure inside the chamber 52 is reduced, e.g. by a pump, to suck residual air or gas out of the shells 20, 22 and the object 10 (see arrows A). The effect is to reduce defects (bubbles or air pockets) in the molded object.

In particular, to maximize the suction of air or gas from the object 10 the shells 20, 22 are mounted between the dies 54, 56 so as to remain slightly separated, e.g. by means of spacer members 102 (fig. 6) which are e.g. rigid or elastic parts, or wedges.

It is also possible to reduce the gas pressure inside the chamber 52 without the dies 54, 56 pressing on the shells 20, 22. In general, in the method the shells 20, 22 may be heated inside chamber 52 in various ways.

Preferably, on the external surface of the dies 54, 56, i.e. the surface opposite the cavity composed of the dies 54, 56 which houses the shells 20, 22, electrical conductors 90 are mounted, which are electrically powered to heat the two shells 20, 22 by electromagnetic induction. For this purpose, two shells 20, 22 are for example made of metal, e.g. aluminum. In this way, the induction system, which is complex and expensive by nature, only needs to be mounted in the press 50, while the shells 20, 22 remain simple and economical in structure.

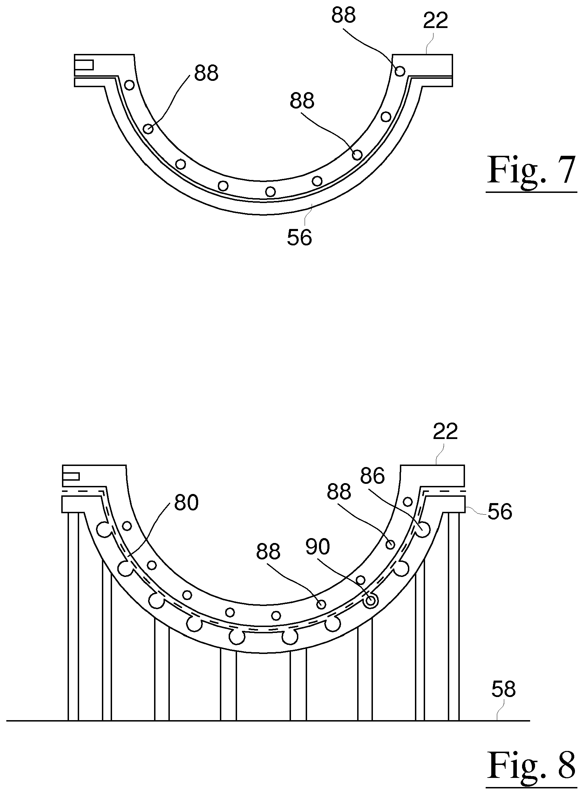

In a different preferred embodiment of the method (fig. 7), the press 50 is without an induction system to avoid its cost and long construction times. The shells 20, 22 are equipped with channels 88 obtained inside the volume of the shells 20, 22. The heating of the object 10 occurs by sending a fluid at high temperature, e.g. oil, into the channels 88. The fluid e.g. comes from an external thermal control unit. The dies 54, 56 still maintain the function of stabilizing the shape of the shells 20, 22.

In particular, the shells 20, 22 with the channels 88 may be produced by molding the shells 20, 22 with *3D-printing* technology.

In order to facilitate a fast pre-series or sampling, and at the same time an efficient and fast serial production stage, both induction heating and fluid heating can be used in the method (Fig. 8). For this purpose, preferably the internal surfaces of each die 54, 56 (those facing the assembly 40) are provided with uniformly distributed grooves or slots 86. The slots 86 are easy and quick to produce, so that the press 50 becomes operational in a short time. Over the slots 86 is mounted a covering member 80 (e.g. a lid, drawn in dotted line) which extends over the slots 86 so as to close them. Each shell 20, 22 is applied inside the dies 54, 56 in contact with a respective covering member 80. The member 80 is e.g. a sheet or a foil, preferably of the same material as the die 56.

A number of objects may be molded by sending a high temperature fluid into the slots 86. The heat will transfer by conduction to the cover member 80 and then to the shells 20, 22.

The shells 20, 22 may have the channels 88 or not.

When mass production begins, electrical conductors 90 are installed in the channels 86, then electrically powered to heat the shells 20, 22 by electromagnetic induction.

In general, in the method to speed up the molding cycle it is preferable to cool the assembly 40 while it is still inside the press 50.

If the shells 20, 22 have the channels 88, in a preferred embodiment after heating the two shells 20, 22 they are cooled by sending a cooling fluid into the channels 88. In another preferred embodiment of the method, the two shells 20, 22 and/or the dies 54, 56 are cooled by bringing them into contact with a cooling fluid (e.g. a liquid, e.g. water or oil). Preferably this occurs
- by introducing a cooling fluid into the chamber 52 to submerge the shells 20, 22, and/or the dies 54, 56, and/or
- by moving the chamber 52 (see arrow F) to immerse it into a basin 104 filled with cooling fluid 106. Preferably, the chamber 52 is opened so that the liquid 106 contained in the basin 104 invades the chamber 52 and comes into contact, e.g. by submerging them, with the still closed shells 20, 22 and/or dies 54, 56.

Once the liquid has drained, the molded object can be extracted.

The dies 54, 56, in all their variants, may be replaced by flat press plates. In this variant the shells have at least two flat sides for abutting against the plates. The advantage is that the replacement of the dies 54, 56 is avoided when the shape of the shells 20, 22 is changed.

## Claims

1. Hot-molding method for producing a compound object formed of a solid internal core and an external carbon layer covering the entire core, with the steps of:
a) taking two combinable shells to obtain a complete mold cavity,
b) enclosing within the cavity formed by the juxtaposition of the two shells a solid core completely wrapped in a carbon lamination;
c) placing the two shells thus filled and attached to each other inside a closed chamber of a press between two pressing members,
d) moving at least one of the two pressing members towards the other to press the shells against each other,
e) heating the core and the carbon layer to make the core expand towards the cavity and solidify the carbon and weld it to the core,
f) separating the shells, and extracting the molded object.

2. Method according to claim 1, wherein in step c) the two shells are placed between two dies configured to reproduce the shape of the shells in negative.

3. Method according to claim 1 or 2, with the steps of
preparing a group of molds prepared as in steps a) and b), and
for each mold in the group, one or more at a time, carrying out steps c) to f).

4. Method according to any previous claim, wherein before step d) a step is carried out of reducing the gas pressure inside the chamber to suck residual air out of the shells.

5. Method according to any previous claim, wherein the two shells thus filled are placed between the two pressing members while keeping the shells slightly separated,
and then the gas pressure inside the chamber is reduced to suck residual air out of the shells.

6. Method according to claim 5, wherein spacer members are placed between the two shells to keep them slightly separated.

7. Method according to any one of claims 2 to 6, wherein step e) occurs by electrically powering electrical conductors placed in at least one die to heat the two shells via electromagnetic induction.

8. Method according to any previous claim, wherein step e) occurs by circulating a heating fluid inside channels obtained inside the volume of the two shells.

9. Method according to any previous claim, wherein before step f) the two shells are cooled by introducing a cooling fluid, e.g. a liquid, into the chamber.

10. Method according to any preceding claim, wherein before step f) the two shells are cooled by relatively moving the chamber and a basin filled with cooling liquid ant to immerse the chamber in the cooling liquid.
